Europäisches Patentamt

European Patent Office

Office européen des brevets

(11) Publication number: 0 316 803
A2

# EUROPEAN PATENT APPLICATION

(21) Application number: 88118829.6

(51) Int. Cl.4: **G11B 11/10**

(22) Date of filing: **11.11.88**

(30) Priority: **16.11.87 JP 288717/87**
**20.11.87 JP 293771/87**
**15.04.88 JP 93062/88**
**24.06.88 JP 156421/88**

(43) Date of publication of application:
**24.05.89 Bulletin 89/21**

(84) Designated Contracting States:
**DE FR GB NL**

(71) Applicant: **FUJI ELECTRIC CO., LTD.**
**1-1, Tanabeshinden, Kawasaki-ku**
**Kawasaki-shi Kanagawa 210(JP)**

(72) Inventor: **Iwamuro, Noriyuki c/o Fuji Electric**
**Co., Ltd.**
**1-1, Tanabeshinden Kawasaki-ku**
**Kawasaki-shi Kanagawa(JP)**
Inventor: **Ohkubo, Keiji c/o Fuji Electric Co.,**
**Ltd.**
**1-1, Tanabeshinden Kawasaki-ku**
**Kawasaki-shi Kanagawa(JP)**
Inventor: **Fumoto, Takabumi c/o Fuji Electric**
**Co., Ltd.**
**1-1, Tanabeshinden Kawasaki-ku**
**Kawasaki-shi Kanagawa(JP)**
Inventor: **Yamazaki, Hisashi c/o Fuji Electric**
**Co., Ltd.**
**1-1, Tanabeshinden Kawasaki-ku**
**Kawasaki-shi Kanagawa(JP)**

(74) Representative: **Patentanwälte Grünecker,**
**Kinkeldey, Stockmair & Partner**
**Maximilianstrasse 58**
**D-8000 München 22(DE)**

(54) **Magneto-optical recording medium.**

(57) A magneto-optical recording medium comprises a substrate (1), a dielectric layer (2) composed of an $SiO_x$ film with a thickness of 10 to 160 nm and formed on the substrate (1), and a magnetic thin film (3) formed on the dielectric layer (2) and having an axis of easy magnetization perpendicular to the surface of the substrate (1). One of titanium, chromium, copper, indium, tin, platinum, aluminum, iron and samarium may be added to the dielectric layer.

FIG.1

# MAGNETO-OPTICAL RECORDING MEDIUM

The present invention relates to a magneto-optical recording medium which has a capability of magneto-optically recording information by means of a laser beam and reading the magnetic information recorded thereon through the use of a magneto-optical effect.

Rewritable magneto-optical memories are hopeful of attaining to the realizing stage in near future. The magneto-optical recording medium employed for such magneto-optical memories comprises a magnetic film made of transition metal amorphous materials containing rare earth metal such as TbFeCo and is formed by laying the magnetic film on a substrate made of glass or resin in such a manner that the magnetic film becomes a vertically magnetized thin film having an axis of easy magnetization perpendicular to a disc surface. Recording information on such a recording medium is done by thermomagnetic writing on the magnetic thin film through the use of a laser beam. Reproducing or reading information is done by detecting rotation of the polarization plane (Kerr rotation) of a reflected light from the magnetic thin film, which is caused by the Kerr magneto-optical effect.

The magnetic thin film currently employed for a vertically magnetized thin film has a Kerr rotation angle $\theta k$ of $0.3°$ through $0.4°$ and a modulation factor of a reproducing light caused by the recording bit is as small as 1 % or some accordingly. Hence, a problem occurs that a reading CN ratio in reproduction is not enough. In general, it is known that the CN ratio in reproduction needs 40 dB or more for keeping an error rate of a recording medium constant. For higher reliability, 45 dB or more is necessary. In order to overcome this defect, a method has been proposed for improving a CN ratio through the use of apparent increase of a Kerr rotation angle caused when reflectivity of a recording medium is made lower by locating a dielectric film made of $Si_3N_4$, $A\ell N$ or the like between the magnetic thin film and the substrate.

Using $Si_3N_4$ or $A\ell N$ for the dielectric film, internal stress caused during sputtering works to offer on the dielectric thin film layer a crack, through which moisture in the atmosphere invades into the magnetic film to corrode the magnetic film. The prior art recording medium, therefore, has a defect that the recording or reproducing characteristic is made inferior when it is left in the atmosphere. Furthermore, when using a dielectric thin film with improper thickness, the recording or reproducing characteristic cannot be improved since the reflectivity of the recording medium does not become so low as it is expected in essence and the apparent Kerr rotation angle $\theta K$ thereof does not become so large as it is expected as well.

Moreover, when a semiconductor laser is usually used for recording information on or deleting it from a magneto-optical recording medium, the speed of revolution of a disc often increases for improving transfer speed of information. A laser beam is irradiated on one point on the recording medium for a shorter time as the speed of revolution increases. It may be, therefore, impossible to raise a recording medium temperature to an operating point for recording or deleting, that is, the Curie temperature.

It is an object of the present invention to provide a magneto-optical recording medium which does not cause a crack on a dielectric film and is excellent in anti-corrosion, thus, never lowering the reproducing CN ratio improved by locating a dielectric film between a magnetic film and a substrate, and is able to record information on or erase it from a recording medium as keeping high speed of revolution of a disc in the state of using a semiconductor laser.

In order to achieve the above and other objects, according to the present invention, a magneto-optical recording medium comprises:
a substrate;
a dielectric layer composed of an $SiO_x$ film with a thickness of 10 to 160 nm and formed on the substrate; and
a magnetic thin film formed on the dielectric layer and having an axis of easy magnetization perpendicular to the substrate surface.

Here, a value of x of the $SiO_x$ film may be within a range from 0.6 to 1.2.

The value of x may be within a range from 0.6 to less than 1.

The value of x may be within a range from 0.6 to 0.9.

The dielectric layer may be composed of an $SiO_x$ film containing Ti of 0.5 to 10.0 at %.

The dielectric layer may be composed of an $SiO_x$ film containing Cr of 0.5 to 8.0 at %.

The dielectric layer may be composed of an $SiO_x$ film containing Cu of 0.5 to 8.0 at %.

The dielectric layer may be composed of an $SiO_x$ film containing In of 0.3 to 8.0 at %.

The dielectric layer may be composed of an $SiO_x$ film containing Sn of 0.3 to 8.0 at %.

The dielectric layer may be composed of an $SiO_x$ film containing Pt of 0.2 to 7.0 at %.

The dielectric layer may be composed of an $SiO_x$ film containing $A\ell$ of 0.3 to 18.0 at %.

The dielectric layer may be composed of an $SiO_x$ film containing Fe of 0.3 to 7.5 at %.

The dielectric layer may be composed of an $SiO_x$ film containing Sm of 0.3 to 7.5 at %.

The above and other objects, effects, features and advantages of the present invention will become more apparent from the following description of embodiments thereof taken in conjunction with the accompanying drawings.

Fig. 1 is a sectional view showing the structure of one embodiment of a magneto-optical recording medium according to the present invention;

Fig. 2 shows the relationships between a reproducing CN ratio and an SiO film thickness and between an optimal recording laser power and the SiO film thickness of one embodiment of a medium according to the present invention;

Fig. 3 shows the relationship between a reproducing CN ratio and a leaving time in a high humidity atmosphere of one embodiment of a medium according to the present invention;

Fig. 4 shows the relationships between a reproducing CN ratio and a Ti content, an optimal recording laser power and a Ti content, and an erasing laser power and a Ti content;

Fig. 5 shows the relationships between a reproducing CN ratio and a Cr content, an optimal recording laser power and a Cr content, and an erasing laser power and a Cr content;

Fig. 6 shows the relationships between a reproducing CN ratio and a Cu content, an optimal recording laser power and a Cu content, and an erasing laser power and a Cu content;

Fig. 7 shows the relationships between a reproducing CN ratio and an In content, an optimal recording laser power and an In content, and an erasing laser power and an In content;

Fig. 8 shows the relationships between a reproducing CN ratio and an Sn content, an optimal recording laser power and an Sn content, and an erasing laser power and an Sn content;

Fig. 9 shows the relationships between a reproducing CN ratio and a Pt content, an optimal recording laser power and a Pt content, and an erasing laser power and a Pt content;

Fig. 10 shows the relationships between a reproducing CN ratio and an Aℓ content, an optimal recording laser power and an Aℓ content, and an erasing laser power and an Aℓ content;

Fig. 11 shows the relationships between a reproducing CN ratio and an Fe content, an optimal recording laser power and an Fe content, and an erasing laser power and an Fe content; and

Fig. 12 shows the relationships between a reproducing CN ratio and an Sm content, an optimal recording laser power and an Sm content, and an erasing laser power and an Sm content.

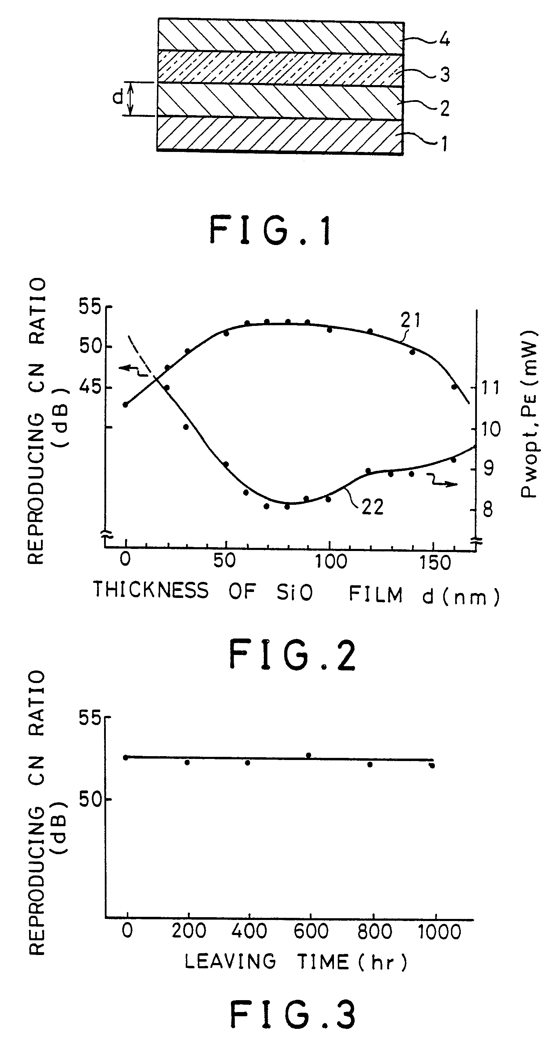

Fig. 1 is a sectional view showing a structure of one embodiment of a magneto-optical recording medium according to the present invention. The medium comprises a transparent plate or substrate 1 made of glass or resin, a dielectric layer 2 layered thereon, an amorphous magnetic thin film 3 made of TbFe or TbFeCo or the like formed on the dielectric layer 2 and a protective layer 4 formed of a dielectric layer and layered on the film 3.

The embodiment discussed below employs as the substrate 1 a sufficiently degased polycarbonate plate with a diameter of 5.25 inch, as the magnetic thin film 3 a $Tb_{23}Fe_{69}Co_8$ or $Tb_{24}Fe_{70}Co_6$ film formed by a sputtering method and as the protective layer 4 a film formed to have a thickness of 100 nm by means of the same materials and method as the dielectric layer 2.

Embodiment 1:

A magneto-optical recording medium was produced using $SiO_x$ as the dielectric layer 2. For the dielectric layer, SiO thin films with respective thickness were formed on the substrate by the RF magnetron sputtering method, which was performed using a sintered SiO target and under the conditions of an argon gas pressure of 0.6 Pa and a sputtering power of 300 W. After formation of the dielectric layer 2, a $Tb_{23}Fe_{69}Co_8$ film 3 with a thickness of 100 nm was formed on the dielectric layer 2, which film 3 was produced by sputtering a TbFeCo alloy target through the use of the DC magnetron sputtering method performed under the conditions of an argon gas pressure of 2.0 Pa and a sputtering power of 300 W. Further, a protective layer 4 was formed on the magnetic film 3. During these process, the recording medium was not exposed to air.

As varying in the range from 0 to 170 nm a film thickness d of an SiO thin film of the dielectric layer 2 formed as discussed above, a CN ratio in reproducing a signal and an optimal recording laser power $P_{wopt}$ were measured. In general, the higher the recording power becomes, the higher the temperature of the medium becomes entirely, and the portion, in which the temperature becomes higher than the recording operation temperature (Curie point), extends. As a result, the length of memory bit will be long. Accordingly, when the recording signal (frequency: f, 50% of duty) is recorded, the duty of reproducting signal depends on the recording power. The optimal recording laser power $P_{wopt}$ is defined as the recording power when the duty of reproducing signal becomes 50%. Then, the ratio of the signal level C (the signal width of frequency f) to the level of the second harmonics $C_2$ (the signal width of 2f) is the maximum when the spectrum of the reproducing signal is analyzed.

The reproducing CN ratio and the optimal recording laser power $P_{wopt}$ were measured under the conditions of a pickup position radius of 30 mm and 60 mm, disc revolutions of 1800 rpm, a recording frequency of 1.88 MHz, an applied magnetic field of 400 Oe and a reproducing laser power of 1 mW. The laser beam had a wavelength of 830 nm. The measured result was illustrated in Fig. 2, in which a curve 21 denotes a reproducing CN ratio measured at the position of 30 mm radius and a curve 22 denotes an optimal recording laser power $P_{wopt}$ measured at the position of 60 mm radius.

As will be understood from Fig. 2, the range of 10 to 160 nm of an SiO film thickness d maintains a CN ratio which is necessary for digital recording, that is, 45 dB or more. The range of 60 to 110 nm attains to a high recording sensitivity, that is, $P_{wopt}$ of 8 to 8.5 mW.

X of the dielectric layer $SiO_x$ has a value varied according to the sputtering method or conditions. When forming an $SiO_x$ film by the sputtering method in an argon gas employing an SiO target, the value of x is varied according to the gas pressure. As the gas pressure went low, the value of x went small. By controlling the argon gas pressure, therefore, an $SiO_x$ with any value of x can be offered. A refractive index n of $SiO_x$ went large with decrease of x and went small with increase of x. The refractive index n of SiO (x = 1.0) was about 2.0, and 2.1 when x = 0.9, further n increased up to 2.47 when x = 0.6. The Kerr rotation angle $\theta K$ went large with increase of n, $\theta K$ of 0.65$^\circ$ and 2.41$^\circ$ were obtained with $SiO_{0.9}$ and $SiO_{0.6}$, respectively. But when x was larger than 1.2, the refractive index n of a $SiO_x$ was made smaller and thus the Kerr enhancement-caused characteristic-improving effect was remarkably degraded. On the other hand, when x was smaller than 0.6, the absorption coefficient was made larger in the wavelength of a laser diode ($\lambda$ = 830 nm) and the light reflectivity of the recording medium was accordingly made smaller, resulting in degrading the reproducing CN ratio. The value of x of $SiO_x$ is preferably within the range from 0.6 to 1.2 and more preferably within the range from 0.6 to less than 1.0, further most preferably within the range from 0.6 to 0.9.

Since the $SiO_x$ has low moisture permeability, unlike the prior art method using $Si_3N_4$ or AℓN as the dielectric film, no cracks occurred. With the $SiO_x$ thickness of 10 to 160 nm, by lowering reflectivity of the recording medium, the reproducing CN ratio rises to 45 dB or more so that it may provide a high recording sensitivity.

Furthermore, the recording medium of this embodiment was left for 1000 hours in a thermo-hygrostat with temperature of 60$^\circ$C and 90 % relative humidity to study its characteristic variation. The result was, as shown in Fig. 3, that the reproduction CN ratio was not changed and no corrosion product was assured.

Embodiment 2:

A magneto-optical recording medium having a dielectric layer 2 composed of SiO which contains Ti was produced. For the dielectric layer 2, an SiO dielectric layer 2 containing Ti of 2.0 at % was formed to have a thickness of 90 nm. The formation was performed under the same conditions as the embodiment 1 using a sintered SiO target in which embedded is a Ti piece with a dimension of 1 mm x 1 mm x 40 mm. Next, by the DC magnetron sputtering method under the same conditions as the embodiment 1, a $Tb_{24}Fe_{70}Co_6$ magnetic thin film 3 was formed to have a thickness of 70 nm. In a like fashion except changing of a Ti piece area to be embedded in the sintered SiO target, magneto-optical recording media having a dielectric layer 2 containing different contents of Ti were formed.

By adding Ti to the dielectric layer 2, the refractive index of the layer increases. For instance, the refractive index n of an SiO film containing 2.4 at % of Ti increases up to 2.4, so that $\theta K$ also increases.

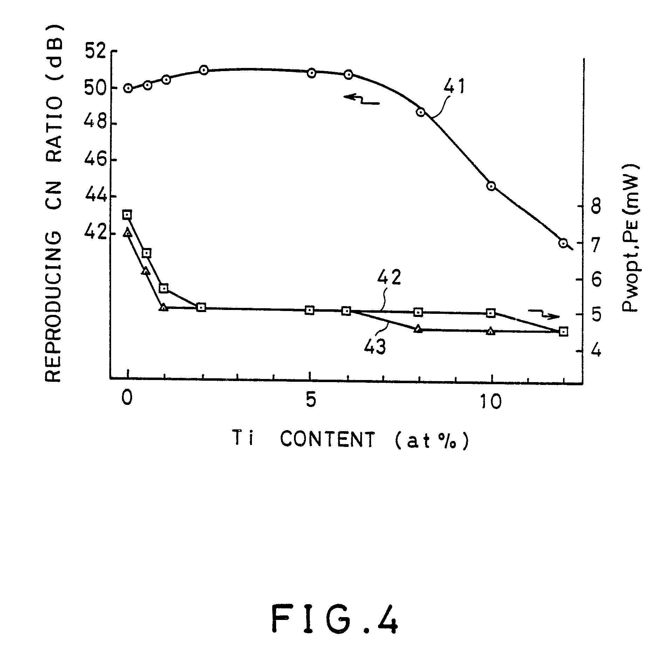

The magneto-optical recording medium having an SiO dielectric layer containing Ti of 2.0 at % had very low values of an optimal recording laser power $P_{wopt}$ in recording a signal and an erasing laser power $P_E$ in erasing a signal, which values were respectively as small as 5.0 mW. The reproducing CN ratio attained to 51 dB, which is far beyond 45 dB. On the other hand, the magneto-optical recording medium having an SiO dielectric layer containing Ti of 12.0 at % had 4.5 mW of $P_{wopt}$ and $P_E$, which values were substantially similar to the former medium, but the reproducing CN ratio was 42 dB, which is below 45 dB. Curves 41, 42 and 43 in Fig. 4, respectively, show the relationship between an Ti content and a reproducing CN ratio, a Ti content and $P_{wopt}$, and a Ti content and $P_E$. When the content of Ti in the SiO dielectric layer 2 goes beyond about 0.5 at %, the values of $P_{wopt}$ and $P_E$ begin to lower. While, when the content of Ti goes beyond 10.0 at % the reproducing CN ratio is degraded below 45 dB. Especially, in the recording media having a dielectric layer containing Ti of 1.0 to 6.0 at %, substantially uniform characteristics can be offered such as 50 to 51 dB of a reproducing CN ratio and 5.0 to 5.5 mW of $P_{wopt}$ and $P_E$.

As to the dielectric layer containing Ti is not only limited to SiO. $SiO_x$ can be used. The preferable range of x is 0.6 to 1.2. The thickness of the dielectric layer 2 whose reproducing CN ratio goes beyond 45 dB is 10 to 160 nm.

Embodiment 3:

A magneto-optical recording medium having a dielectric layer 2 composed of SiO which contains Cr was produced. The dielectric layer 2 containing 2.0 at % of Cr added to an SiO thin film was formed to have a thickness of 90 nm using the same method as the embodiment 2 and a sintered SiO target which embedded is a Cr piece with a dimension of 1 mm x 1 mm x 40 mm in lieu of the Ti piece. Furthermore, in the similar fashion to the embodiment 2, by changing a Cr piece area to be embedded in the SiO target magneto-optical recording media having a dielectric layer 2 containing different Cr contents were formed.

By adding Cr to the dielectric layer 2, the refractive index of the layer increases. For instance, the refractive index n of an SiO film containing 3.8 at % of Cr increases up to 2.45, so that $\theta K$ also increases.

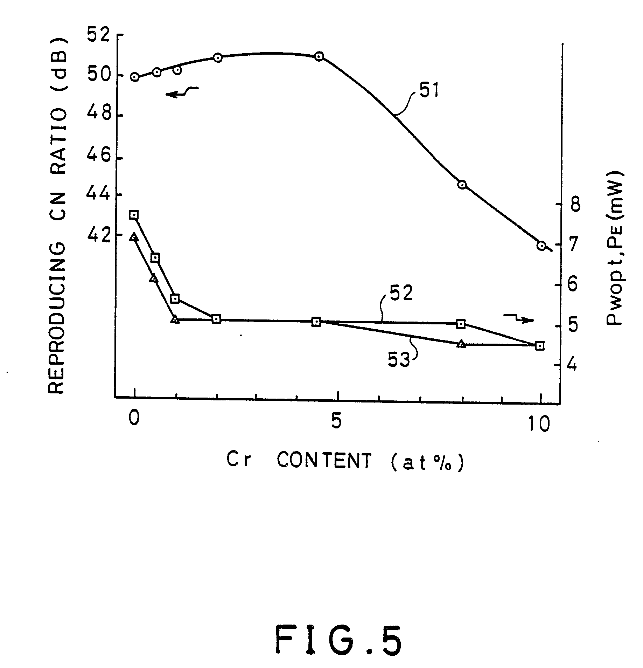

The reproducing CN ratio, $P_{wopt}$ and $P_E$ have the same values as the medium containing Ti of 2.0 at % in case of 2.0 at % Cr, and as the medium containing 12.0 at % of Ti in case of 10.0 at % Cr. Curves 51, 52 and 53 in Fig. 5, respectively, show the relationship between a Cr content and a reproducing CN ratio, a Cr content and $P_{wopt}$, and a Cr content and $P_E$. When the content of Cr goes beyond about 0.5 at %, the values of $P_{wopt}$ and $P_E$ begin to lower. While, when Cr content goes beyond 8.0 at %, the reproducing CN ratio is lowered to 45 dB or less. Especially, in the recording media having a dielectric layer containing Cr of 1.0 to 4.5 at %, substantially uniform characteristics can be offered, which is same in the media having a dielectric layer containing Ti of 1.0 to 6.0 at %.

As to the dielectric layer containing Cr is not only limited to SiO. $SiO_x$ can be used. The preferable range of x is 0.6 to 1.2. The thickness of the dielectric layer 2 whose reproducing CN ratio goes beyond 45 dB is 10 to 160 nm.

Embodiment 4:

A magneto-optical recording medium having a dielectric layer 2 composed of SiO which contains Cu was produced. The recording media having a dielectric layer containing different Cu contents were formed under the same conditions as the embodiments 2 and 3 except that a Cu piece is embedded in a sintered SiO target in lieu of the Ti piece in the embodiment 2 and the Cr piece in the embodiment 3.

By adding Cu to the dielectric layer 2, the refractive index of the layer increases. For instance, the refractive index n of an SiO film containing 2.0 at % of Cu increases up to 2.35, so that $\theta K$ also increases.

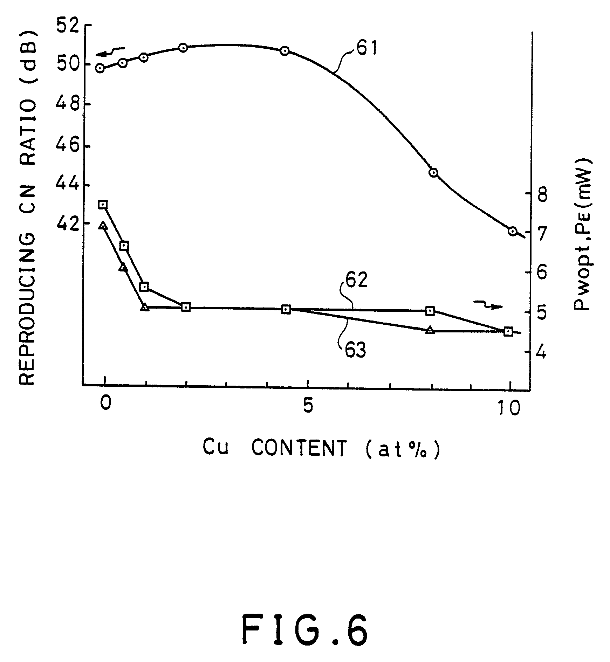

The reproducing CN ratio, $P_{wopt}$ and $P_E$ have the same values as the medium containing 2.0 at % Ti or 2.0 at % Cr in case of 2.0 at % Cu, and as the medium containing 12.0 at % Ti or 10.0 at % Cr in case of 10.0 at % Cu. Curves 61, 62 and 63 in Fig. 6, respectively, show the relationship between a Cu content and a reproducing CN ratio, a Cu content and $P_{wopt}$, and a Cu content and $P_E$. When the content of Cu goes beyond about 0.5 at %, the values of $P_{wopt}$ and $P_E$ begin to lower. While, when the Cu content goes beyond 8.0 at %, the reproducing CN ratio is lowered to 45 dB or less. Especially, in the recording media having a dielectric layer containing Cu of 1.0 to 4.5 at %, substantially uniform characteristics having 50 to 51 dB of reproducing CN ratio and 5.0 to 5.5 mW of $P_{wopt}$ and $P_E$ can be offered, which are same in the range of each content of 1.0 to 6.0 at % Ti or 1.0 or 4.5 at % Cr.

As to the dielectric layer containing Cu is not only limited to SiO. $SiO_x$ can be used. The preferable range of x is 0.6 to 1.2. The thickness of the dielectric layer 2 whose reproducing CN ratio goes beyond 45 dB is 10 to 160 nm.

Embodiment 5:

A magneto-optical recording medium having a dielectric layer 2 composed of SiO which contains In was produced. The recording media having a dielectric layer containing different In contents were formed under the same conditions as the embodiments, 2, 3 and 4 except that an In piece is embedded in a sintered SiO target.

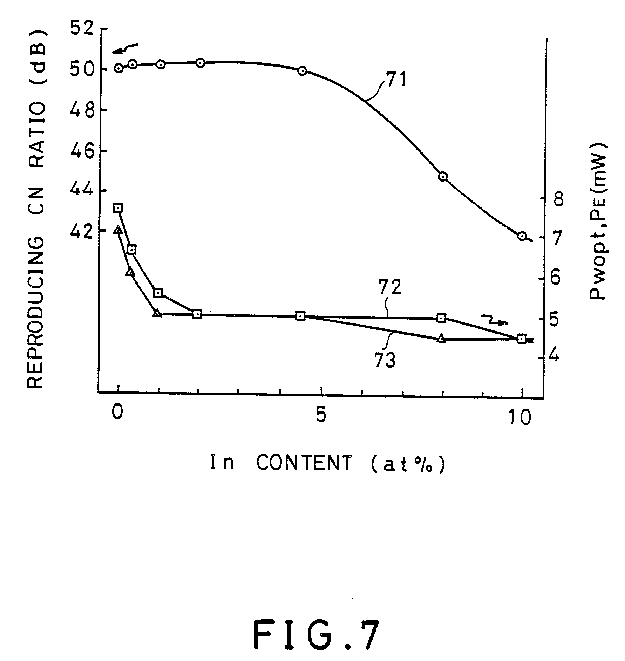

Like CR or Cu addition, in case of adding In of 2.0 at %, the reproducing CN ratio is 51 dB and $P_{wopt}$ and $P_E$ are 5.0 mW and in case of adding In of 10.0 at %, the reproducing CN ratio is 42 dB and $P_{wopt}$ and $P_E$ are 4.5 mW. Curves 71, 72 and 73 in Fig. 7, respectively, show the relationship between an In content and a reproducing CN ratio, an In content and $P_{wopt}$, and an In content and $P_E$. When the content of In in the SiO dielectric layer 2 goes beyond about 0.3 at %, the values of $P_{wopt}$ and $P_E$ begin to lower. While, when In content goes beyond 8.0 at %, the reproducing CN ratio is lowered to 45 dB or less. Especially, in the recording media having a dielectric layer containg In of 1.0 to 4.5 at %, substantially uniform characteristics having 50 to 51 dB of reproducing CN ratio and 5.0 to 5.5 mW of $P_{wopt}$ and $P_E$ can be offered.

As to the dielectric layer containing In is not only limited to SiO. $SiO_x$ can be used. The preferable range of x is 0.6 to 1.2. The thickness of the dielectric layer 2 whose reproducing CN ratio goes beyond 45 dB is 10 to 160 nm.

Embodiment 6:

A magneto-optical recording medium having a dielectric layer 2 composed of SiO which contains Sn was produced. The recording media having a dielectric layer containing different Sn contents were formed under the same conditions as the embodiments 2 to 5 except that an Sn piece is embedded in a sintered SiO target.

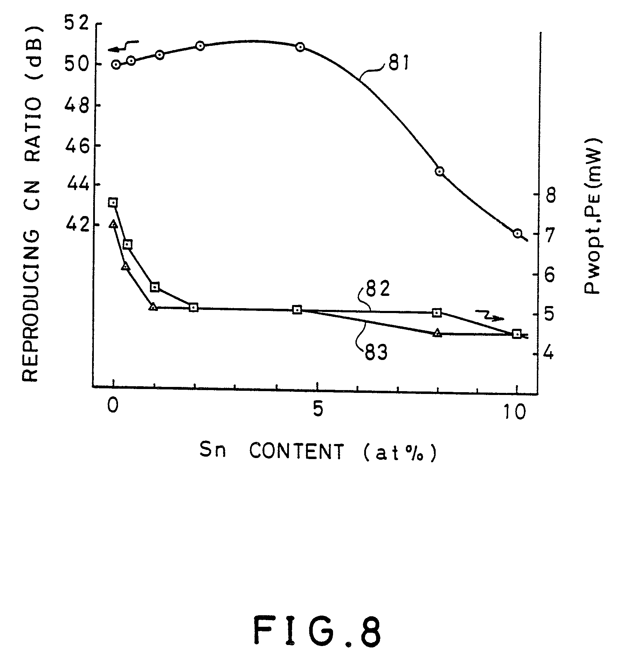

In the case of the dielectric layers with Sn contents of 2.0 and 10.0 at %, the reproducing CN ratios, $P_{wopt}$ and $P_E$ were same as those in case of the layers with In contents of the same atomic percentage. Curves 81, 82 and 83 in Fig. 8, respectively, show the relationship between an Sn content and a reproducing CN ratio, an Sn content and $P_{wopt}$, and an Sn content and $P_E$. When the content of Sn in the SiO dielectric layer 2 goes about 0.3 at %, the values of $P_{wopt}$ and $P_E$ begin to lower. While, when Sn content goes beyond 8.0 at %, the reproducing CN ratio is lowered to 45 dB or less. Especially, in the recording media having a dielectric layer containing Sn of 1.0 to 4.5 at %, like the In-added medium, substantially uniform characteristics having 50 to 51 dB of reproducing CN ratio and 5.0 to 5.5 mW of $P_{wopt}$ and $P_E$ can be obtained.

As to the dielectric layer containing Sn is not only limited to SiO. $SiO_x$ can be used. The preferable range of x is 0.6 to 1.2. The thickness of the dielectric layer 2 whose reproducing CN ratio goes beyond 45 dB is 10 to 160 nm.

Embodiment 7:

A magneto-optical recording medium having a dielectric layer 2 composed of SiO which contains Pt was produced. The recording media having a dielectric layer containing different Pt contents were formed under the same conditions as the embodiments 2 to 6 except that a Pt piece is embedded in a sintered SiO target.

By adding Pt to the dielectric layer 2, the refractive index of the layer increases. For instance, the refractive index n of an SiO film containing 2.5 at % of Pt increases up to 2.5, so that $\theta$K also increases.

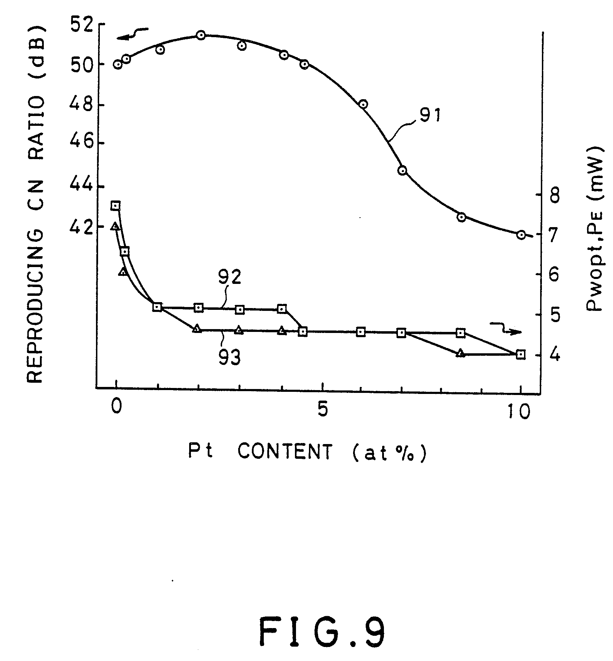

In the case of the dielectric layer 2 containing Pt of 2.0 at %, $P_{wopt}$ and $P_E$ were as low as 4.5 mW and the reproducing CN ratio was as large as 51.5 dB. On the other hand, in case of the SiO dielectric layer 2 containing Pt of 10.0 at %, $P_{wopt}$ and $P_E$ was made as low as 4.0 mW but the reproducing CN ratio was lowered to 42 dB by 9.5 dB. Curves 91, 92 and 93 in Fig. 9, respectively, show the relationship between a Pt content and a reproducing CN ratio, a Pt content and $P_{wopt}$, and a Pt content and $P_E$. When the content of Pt in the SiO dielectric layer 2 goes beyond about 0.2 at %, the values of $P_{wopt}$ and $P_E$ begin to lower. While, when the Pt content goes beyond 7.0 at %, the reproducing CN ratio is lowered to 45 dB or lower. Especially, in the recording media having a dielectric layer containing Pt of 1.0 to 5.5 at %, substantially uniform characteristics having 50 to 51.5 dB of reproducing CN ratio and 4.5 to 5.0 mW of $P_{wopt}$ and $P_E$ can be obtained.

As to the dielectric layer containing Pt is not only limited to SiO. $SiO_x$ can be used. The preferable range of x is 0.6 to 1.2. The thickness of the dielectric layer 2 whose reproducing CN ratio goes beyond 45 dB is 10 to 160 nm.

Embodiment 8:

A magneto-optical recording medium having a dielectric layer 2 composed of SiO which contains Aℓ was produced. Like the same method discussed in the embodiment 2, the dielectric layer 2 of 70 nm thickness containing Aℓ of 9.0 at % in the SiO thin film was formed by employing a sintered SiO target in which embedded is an Aℓ piece with a dimension of 1 mm x 1 mm x 40 mm in lieu of the Ti piece in the embodiment 2. Further, magneto-optical recording media having the same arrangement as the embodiment 2 but having different contents of Aℓ in the dielectric layer were formed. The analysis of these dielectric layers 2 with ESCA (electron spectrocopy for chemical analysis) revealed that Aℓ contained in the medium was in the state of an oxide.

By adding Aℓ to the dielectric layer 2, the refractive index of the layer increases. For instance, the refractive index n of an SiO film containing 12.5 at % of Aℓ increases up to 2.4, so that $\theta$K also increases.

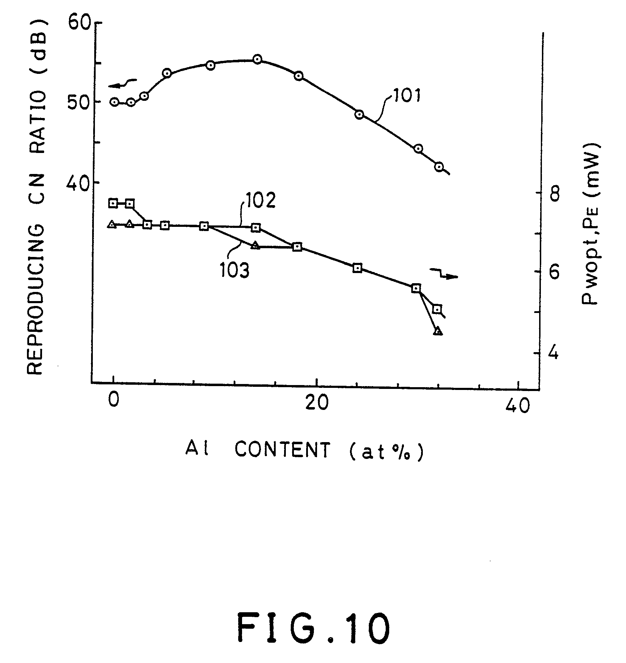

In the magneto-optical recording medium containing the SiO dielectric layer with 9.0 at % of Aℓ, the optimal recording laser power $P_{wopt}$ in recording a signal and the erasing laser power $P_E$ in erasing a signal were 7.0 mW, recording or erasing the signal can be sufficiently performed with these laser powers. The reproducing CN ratio raised to 55 dB, which goes far beyond 45 dB. In the medium having the SiO dielectric layer containing 32.0 at % of Aℓ, on the other hand, $P_{wopt}$ was 5.0 mW and $P_E$ was 4.5 mW, which are quite low values, but the reproducing CN ratio lowered to 43 dB, which is less than 45 dB. Curves 101, 102 and 103 in Fig. 10, respectively, show the relationship between an Aℓ content and a reproducing CN ration, an Aℓ content and $P_{wopt}$, and an Aℓ content and $P_E$. When the content of Aℓ in the SiO dielectric layer 2 is in the range from about 3.0 to 18.0 at %, the values of $P_{wopt}$ and $P_E$ keep substantially constant but the reproducing CN ratio increases. When Aℓ content goes beyond 18.0 at %, the values of $P_{wopt}$ and $P_E$ begin to lower. While, when the Aℓ content goes beyond 30.0 at %, the reproducing CN ratio is lowered to 45 dB or less. Especially, in the recording media having a dielectric layer containing Aℓ of 5.0 to 18.0 at %, the excellent recording and erasing characteristics having 54 to 56 dB of reproducing CN ratio and 6.5 to 7.0 mW of $P_{wopt}$ and $P_E$ can be realized.

As to the dielectric layer containing Aℓ is not only limited to SiO. $SiO_x$ can be used. The preferable range of x is 0.6 to 1.2. The thickness of the dielectric layer 2 whose reproducing CN ratio goes beyond 45 dB is 10 to 160 nm.

Embodiment 9:

A magneto-optical recording medium having a dielectric layer 2 composed of SiO which contains Fe was produced. Like the same method discussed in the embodiment 2, the dielectric layer 2 of 90 nm thickness containing Fe of 2.0 at % in the SiO thin film was formed by employing a sintered SiO target in which embedded was an Fe piece with a dimension of 1 mm x 1 mm x 40 mm in lieu of the Ti piece. Further, magneto-optical recording media having the same arrangement as the embodiment 2 but having different contents of Fe in the dielectric layer were formed.

By adding Fe to the dielectric layer 2, the refractive index of the layer increases. For instance, the refractive index n of an SiO film containing 2.9 at % of Fe increases up to 2.35, so that θK also increases.

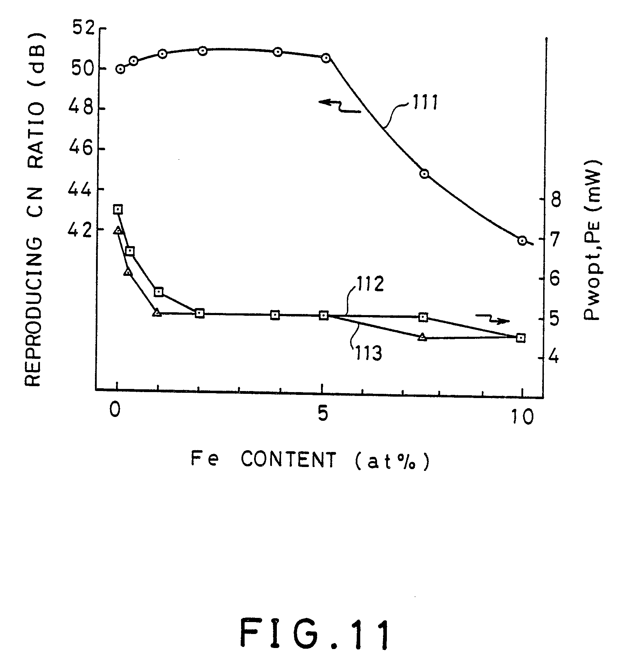

In the magneto-optical recording medium having a SiO dielectric layer containing 2.0 at % of Fe, the optimal recording laser power $P_{wopt}$ in recording a signal and the erasing laser power $P_E$ in erasing a signal were as low as 5.0 mW and the reproducing CN ratio raised to 51 dB, which goes far beyond 45 dB. In the medium containing the SiO dielectric layer with 10.0 at % of Fe, on the other hand, $P_{wopt}$ and $P_E$ were 4.5 mW, which are substantially same as the medium containing 2.0 at % of Fe, but the reproducing CN ratio lowered to 42 dB, which goes below 45 dB. Curves 111, 112 and 113 in Fig. 11, respectively, show the relationship between an Fe content and a reproducing CN ratio, an Fe content and $P_{wopt}$, and an Fe content and $P_E$. When the content of Fe in the SiO dielectric layer 2 goes beyond about 0.3 at %, the values of $P_{wopt}$ and $P_E$ begin to lower. While, when the Fe content goes beyond 7.5 at %, the reproducing CN ratio is degraded to 45 dB or lower. Especially, in the recording media having a dielectric layer containing Fe of 1.0 to 5.0 at %, substantially uniform characteristics having 50.5 to 51.0 dB of reproducing CN ratio and 5.0 to 5.5 mW of $P_{wopt}$ and $P_E$ can be realized.

As to the dielectric layer containing Fe is not only limited to SiO. $SiO_x$ can be used. The preferable range of x is 0.6 to 1.2. The thickness of the dielectric layer 2 whose reproducing CN ratio goes beyond 45 dB is 10 to 160 nm.

Embodiment 10:

A magneto-optical recording medium having a dielectric layer 2 composed of SiO which contains Sm was produced. Like the same method discussed in the embodiment 2, the dielectric layer 2 of 90 nm thickness containing Sm of 2.0 at % in the SiO thin film was formed by employing a sintered SiO target in which embedded is an Sm piece with a dimension of 1 mm x 1 mm x 40 mm in lieu of the Ti piece. Further, magneto-optical recording media having the same arrangement as the embodiment 2 but having different contents of Sm in the dielectric layer were formed.

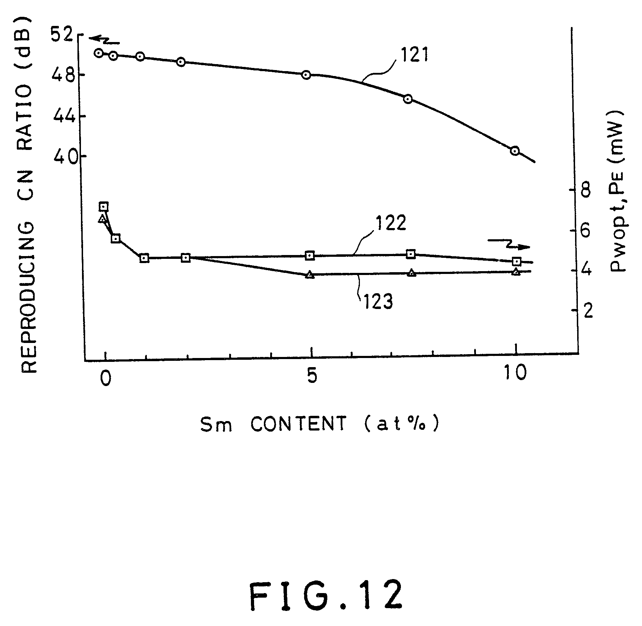

In the magneto-optical recording medium containing the SiO dielectric layer with 2.0 at % of Sm, the optimal recording laser power $P_{wopt}$ in recording a signal and the erasing laser power $P_E$ in erasing a signal were as low as 5.0 mW and the reproducing CN ratio raised to 49 dB, which goes far beyond 45 dB. In the medium containing the SiO dielectric layer with 10.0 at % of Sm, on the other hand, $P_{wopt}$ and $P_E$ were 4.5 mW, which are substantially same as the medium containing 2.0 at % of Sm, but the reproducing CN ratio lowered to about 40 dB, which goes below 45 dB. Curves 121, 122 and 123 in Fig. 12, respectively, show the relationship between an Sm content and a reproducing CN ratio, an Sm content and $P_{wopt}$, and an Sm content and $P_E$. When the content of Sm in the SiO dielectric layer 2 goes beyond about 0.3 at %, the values of $P_{wopt}$ and $P_E$ begin to lower. While, when the Sm content goes beyond 7.5 at %, the reproducing CN ratio is degraded to 45 dB or lower. Especially, in the recording media having a dielectric layer containing Sm of 1.0 to 5.0 at %, substantially uniform characteristics having 48.0 to 50.0 dB of reproducing CN ratio and 4.0 to 5.0 mW of $P_{wopt}$ and $P_E$ can be realized.

As to the dielectric layer containing Sm is not only limited to SiO. $SiO_x$ can be used. The preferable range of x is 0.6 to 1.2. The thickness of the dielectric layer 2 whose reproducing CN ratio goes beyond 45 dB is 10 to 160 nm.

As discussed above, the present invention provides a magneto-optical recording medium which is excellent in a recording sensitivity and erasing characteristics as keeping the reproducing CN ratio as 45 dB or more through the use of an $SiO_x$ film or a various elements-added $SiO_x$ film located between the magnetic film and the substrate to lower reflectivity of the recording medium and to inhibit invasion of moisture, which film works as a dielectric layer for increasing an apparent Kerr rotation angle.

The invention has been described in detail with respect to preferred embodiments, and it will now be apparent from the foregoing to those skilled in the art that changes and modifications may be made without departing from the invention in its broader aspects, and it is the invention, therefore, in the appended claims to cover all such changes and modifications as fall within the true spirit of the invention.

## Claims

1. A magneto-optical recording medium characterized by comprising:
a substrate;
a dielectric layer composed of an $SiO_x$ film with a thickness of 10 to 160 nm and formed on said substrate; and
a magnetic thin film formed on said dielectric layer and having an axis of easy magnetization perpendicular to said substrate surface.

2. A magneto-optical recording medium as claimed in claim 1, characterized in that a value of x of said $SiO_x$ film is within a range from 0.6 to 1.2.

3. A magneto-optical recording medium as claimed in claim 2, characterized in that said value of x is within a range from 0.6 to less than 1.

4. A magneto-optical recording medium as claimed in claim 3, characterized in that said value of x is within a range from 0.6 to 0.9.

5. A magneto-optical recording medium as claimed in claim 1, characterized in that said dielectric layer is composed of an $SiO_x$ film containing Ti of 0.5 to 10.0 at %.

6. A magneto-optical recording medium as claimed in claim 1, characterized in that said dielectric layer is composed of an $SiO_x$ film containing Cr of 0.5 to 8.0 at %.

7. A magneto-optical recording medium as claimed in claim 1, characterized in that said dielectric layer is composed of an $SiO_x$ film containing Cu of 0.5 to 8.0 at %.

8. A magneto-optical recording medium as claimed in claim 1, characterized in that said dielectric layer is composed of an $SiO_x$ film containing In of 0.3 to 8.0 at %.

9. A magneto-optical recording medium as claimed in claim 1, characterized in that said dielectric layer is composed of an $SiO_x$ film containing Sn of 0.3 to 8.0 at %.

10. A magneto-optical recording medium as claimed in claim 1, characterized in that said dielectric layer is composed of an $SiO_x$ film containing Pt of 0.2 to 7.0 at %.

11. A magneto-optical recording medium as claimed in claim 1, characterized in that said dielectric layer is composed of an $SiO_x$ film containing Aℓ of 0.3 to 18.0 at %.

12. A magneto-optical recording medium as claimed in claim 1, characterized in that said dielectric layer is composed of an $SiO_x$ film containing Fe of 0.3 to 7.5 at %.

13. A magneto-optical recording medium as claimed in claim 1, characterized in that said dielectric layer is composed of an $SiO_x$ film containing Sm of 0.3 to 7.5 at %.

# FIG.1

# FIG.2

# FIG.3

FIG.4

FIG.5

FIG.6

FIG.7

FIG.8

FIG.9

FIG.10

FIG.11

FIG.12